Europäisches Patentamt

(19) European Patent Office

Office européen des brevets

(11) Publication number: **0 241 118 B1**

(12) **EUROPEAN PATENT SPECIFICATION**

(45) Date of publication of patent specification:
20.02.91 Bulletin 91/08

(51) Int. Cl.⁵: **B41J 2/04,** H04N 1/18,
B41J 2/005

(21) Application number: 87301579.6

(22) Date of filing: 24.02.87

(54) Apparatus for reproduction of documents.

(30) Priority: 10.03.86 IT 6719086

(43) Date of publication of application:
14.10.87 Bulletin 87/42

(45) Publication of the grant of the patent:
20.02.91 Bulletin 91/08

(84) Designated Contracting States:
CH DE FR GB LI NL

(56) References cited:
WO-A-82/03123
US-A- 4 090 205
US-A- 4 314 282
US-A- 4 321 627

(73) Proprietor: Ing. C. Olivetti & C., S.p.A.
Via G. Jervis 77
I-10015 Ivrea (Torino) (IT)

(72) Inventor: Brescia, Riccardo
Via Montodo 6
I-10015 Ivrea (Turin) (IT)
Inventor: Coli, Giuseppe
Via Circonvallazione 17
I-10018 Pavone (Turin) (IT)

(74) Representative: Pears, David Ashley et al
REDDIE & GROSE 16 Theobalds Road
London WC1X 8PL (GB)

Jouve, 18, rue Saint-Denis, 75001 PARIS

**Description**

The present invention relates to an apparatus of the type set forth in the introductory part of claim 1, for reproduction of an original document, particularly but not exclusively for colour reproduction.

A dot matrix printer is known (WO 82/03123) in which a carriage bearing a printing head moves with an alternating movement in front of an original document to be reproduced, over the entire width of the document, while the latter is caused to advance intermittently in a direction perpendicular to the movement of the carriage. In that way the printing head prints serially with a single colour.

Since the reading and writing operations are of serial type, the carriage is required to cover the entire width of the original on each occasion. Consequently that apparatus suffers from the disadvantage of being very slow since the speed of translatory movement of the carriage cannot be raised. Otherwise there will be excessive vibration, caused by the inertia of the weight of the carriage which moves with an alternating movement.

However it is already known (WO 82/03123 and US-A 4 090 205) to decrease this problem by using a row of ink jet nozzles which are oscillated along the row so that each nozzle only covers a part of the width of the paper on which printing is effected.

It is also known (US-A 4 314 282) to apply this principle both to the printing ink jets and a row of image detectors of a reprographic apparatus.

An apparatus according to the introductory part of claim 1 is known from US-A 4 321 627 in which the image on a stationary document is scanned line by line by means of an oscillating mirror. The mirror, an image conversion device and a printer are mounted on a carriage translating across the document at uniform speed. A printing support is wound on a drum rotating in one direction.

In a different embodiment of the above apparatus shown in US-A 4 321 627, the original is moved across a fixed reading station, in which the document is scanned by a laser beam through an oscillating mirror.

The object of the present invention is to provide an apparatus which has a high speed of reproduction with reduced problems from inertia.

The apparatus according to the invention is defined in claim 1. The invention also provides a process for the reproduction of an image of an original document, as defined in claim 18.

These and other features of the invention will be clearly apparent from the following description of a preferred embodiment which is given by way of non-limiting example with reference to the accompanying drawings in which :

Figure 1 is a partly sectional perspective view of reproduction apparatus embodying the invention,

Figure 2 is a section of the dichroic filters used in the apparatus illustrated in Figure 1,

Figure 3 is a simplified block diagram of the chromatic signal processing circuit,

Figure 4 is a partly sectional plan view of the print head,

Figure 5 is a view of the print head in section taken along line V-V in Figure 4,

Figure 6 is a view in vertical section parallel to the direction of movement of the carriage of the apparatus shown in Figure 1,

Figure 7 is a view in vertical section taken along line VII-VII in Figure 6,

Figure 8 is a graph showing the speed of movement of the paper,

Figure 9 is a plan view of the device for cleaning the print head, and

Figure 10 is a view in section taken along line X-X in Figure 9.

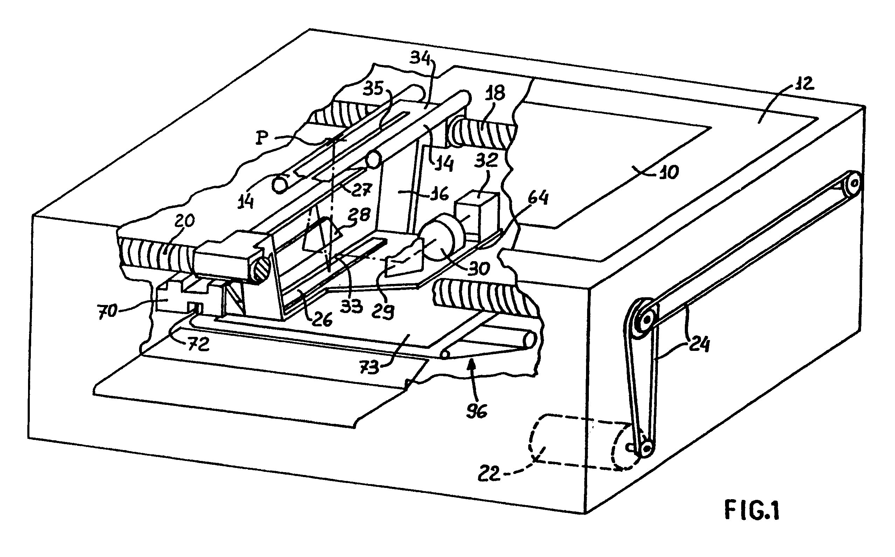

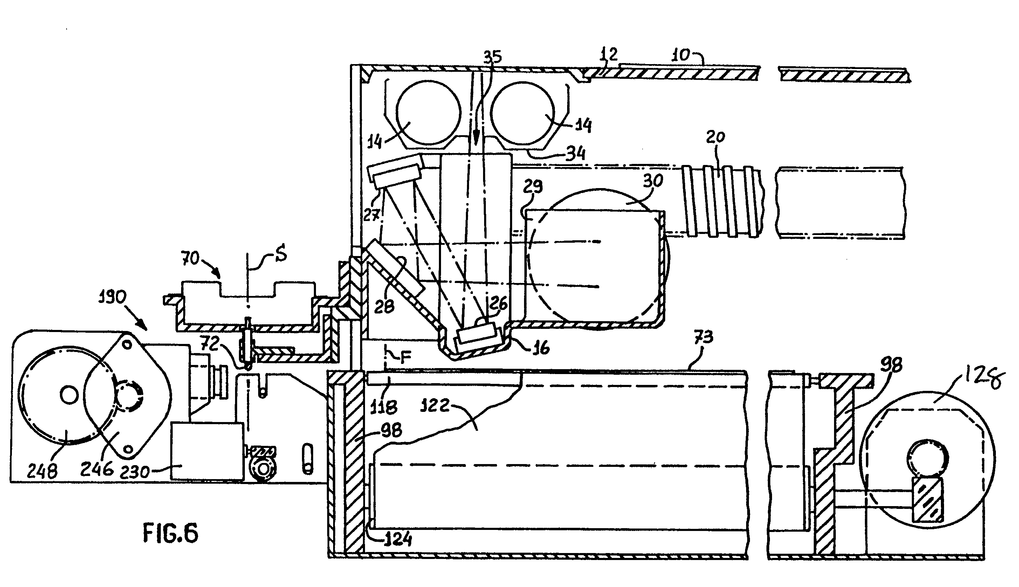

Referring to Figures 1 and 6, an original document 10 to be reproduced is placed on a fixed transparent exposure surface 12. The original 10 may include images in colours and/or in black and white ; reference will be made in the following description to a coloured original. The original 10 is lit from below by a pair of lamps 14 mounted on a carriage 16 which slides along below the exposure surface 12 and parallel thereto.

The carriage 16 is supported and moved by two screws 18 and 20 which are parallel to the exposure surface 12 and which are rotated selectively in both directions by a motor 22 by way of a belt transmission 24. Mounted on the carriage 16 are four mirrors 26, 27, 28 and 29 for directing the light rays reflected from the original 10 on to an objective lens 30 which focuses the image of the original on to an electrical-optical image converter 32. The converter 32 transforms the light image into electrical signals for subsequent electronic processing, as will be described hereinafter.

Figure 1 includes a dash-dotted line 33 to show by way of example the path of one of the light rays involved. A shield 34 having a slot 35 perpendicular to the direction of movement of the carriage 16 is interposed between the original and the first mirror 26 to delimit the scanned surface of the original to a strip which is about 4 mm in width and as long as the width of the original. That system for linear scanning in successive strips of the original is found to be highly effective in that it makes it possible to scan the entire surface of the original with a single scanning travel.

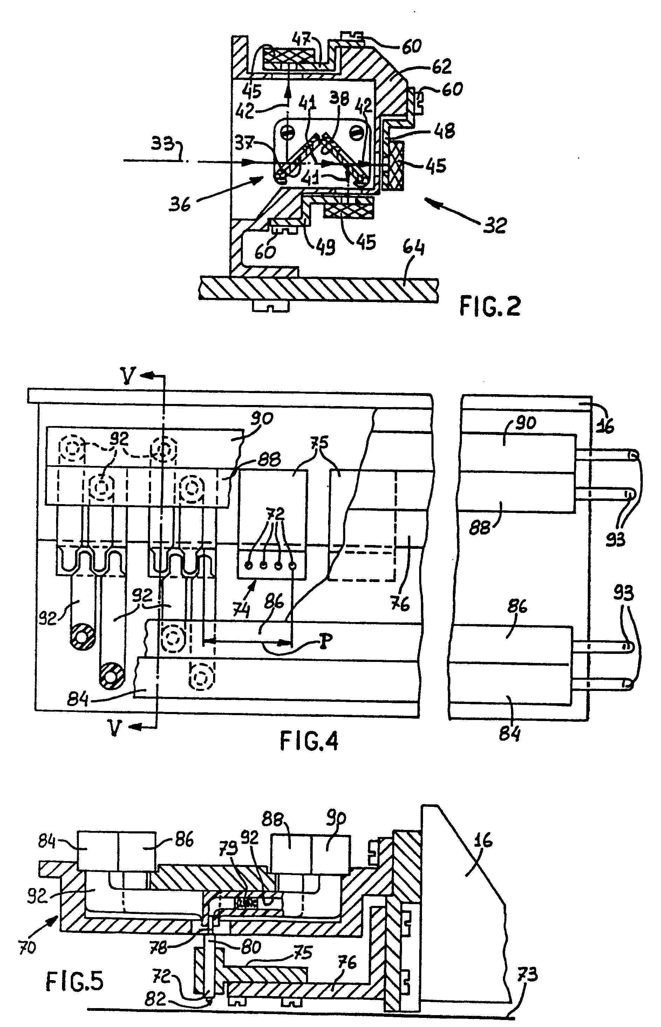

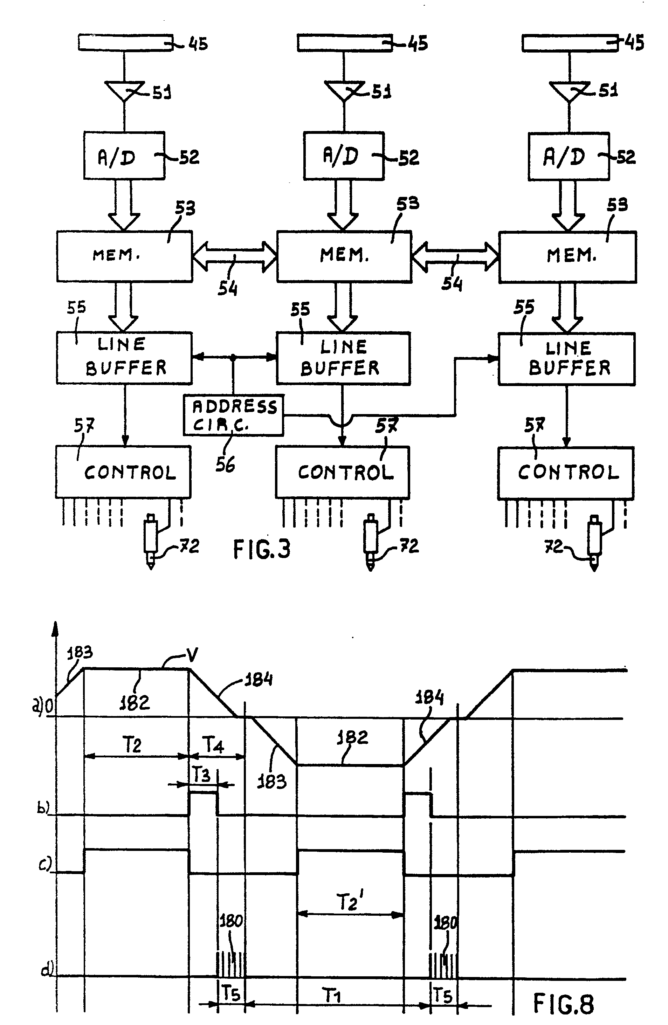

The converter 32 comprises a dichroic filter 36 (see Figure 2) which is formed by two glass plates 37 and 38 covered with a semireflective layer of metallic oxides with a suitable refractive index and capable of breaking the chromatic content of the incident ray 33 down into complementary colour bands with a high level of optical efficiency. In particular each plate 37 and 38 reflects only one primary colour band, for example cyan, while it is transparent in respect of the rest of the chromatic content of the incident ray. Therefore the incident ray 33 is successively broken down by the two plates 37 and 38 into three rays 40, 41 and 42 of three primary colours, being respectively cyan, magenta and yellow. Each ray 40, 41 and 42 is passed to three corresponding electrooptical transducers 45 of known type to be converted into analog electrical signals representing the light intensity of the incident rays for each colour selected.

The transducers 45 are for example of the CCD (Charge Coupled Device) type and are in the form of integrated circuits. They are mounted on supports 47, 48 and 49 respectively fixed by regulating screws 60 to a base portion 62 mounted on a plate member 64 of the carriage 16 (see Figures 1 and 2). Each transducer 45 contains 128 sensitive points aligned in such a way as to be hit by the light beam reflected by a line of the original 10.

Each transducer 45 (see Figure 2) is electrically connected to its own logic circuit (see Figure 3) which provides for autonomous and real-time processing by digital means of the signals generated by the transducer and corresponding to each of the three colour bands selected by the filter 36.

Figure 3 shows in diagrammatic form the block diagram of the logic circuit for processing of the chromatic signals. The signals which are generated by the transducers 45 and which relate to each of the three primary colours are firstly amplified in analog form by amplifiers 51 and then converted into digital form by analog-to-digital converters 52. A group of memories 53 contains parameters which are arranged in the form of tables, being used for compensation of the chromatic level of each primary colour and for reconstruction of the surface distribution of each chromatic component of the image.

The memories 53 relating to each chromatic component are connected together by busses 54 to permit crossed interchange of information for the purpose of reconstructing the various hues of the intermediate colours. Finally, line buffers 55 controlled by address circuits 56 temporarily store the items of information to be passed serially to the groups of ink jet nozzles 72 which, as will become more clearly apparent hereinafter, are each supplied with an ink of corresponding colour and activated by control circuits 57.

The use of a dichroic filter of the type described affords a substantial advantage in regard to the speed of reproduction, in that it makes it possible to detect with a single scanning motion the basic chromatic components of the coloured image of the original, greatly reducing the reading times. Another substantial advantage achieved lies in the simultaneous digital processing of the basic chromatic components, which permits a substantial simplification in the logic circuits for processing of the colour signals, in that they do not have to involve complete memory circuits, which are otherwise necessary, for example when it is necessary to provide successively for reading of each primary colour with a plurality of scanning movements.

Mounted on the carriage 16 (see Figure 1) is a print head 70 of ink jet type, having a plurality of print elements 72 which are aligned in a direction perpendicular to the direction of movement of the carriage 16 and which are intended to print on a sheet of plain paper 73 which is parallel to the original 10. In a particular embodiment (see Figures 4 and 5), the head 70 carries forty eight print elements 72 which are subdivided into twelve groups 74, each of four elements. The print elements 72 of each group 74 are fixed to a metal block 75 by adhesive. The twelve blocks 75 are mounted on a support plate 76 which is fixed to the carriage 16. Each print element 72 is of known type and is formed by a glass or metal tube 78 inserted into a piezoelectric transducer 80 of sleeve type which is intended to compress the tube 78 in response to predetermined electrical pulses to expel drops of ink by way of a nozzle 82 disposed at one end of the tube 78.

In order to be able to reproduce the chromatic range of the original as faithfully as possible, three of the print elements 72 are supplied with inks of three primary colours, that is to say magenta, yellow and cyan. The fourth print element is supplied with black ink which is used preferably for reproducing written texts.

The print elements of -the same colour occupy the same relative position on each of the twelve blocks 75 and are connected to corresponding manifolds 84, 86, 88 and 90 for the coloured inks by means of conduits 92.

The conduits 92 have a section for the ink which is much larger than the section of the internal hole in each tube 78 and contain a filter 79 of porous material to prevent the tubes 78 from emptying. Therefore the conduits 92 behave in hydraulic terms as conduits of infinite length, which makes it possible to provide for selfcancellation of the pressure waves reflected in the tubes 78 when the piezo-electric transducer 80 is suitably excited, for example as described in our European patent application No 86 305 013.4 (EP-A-0208484).

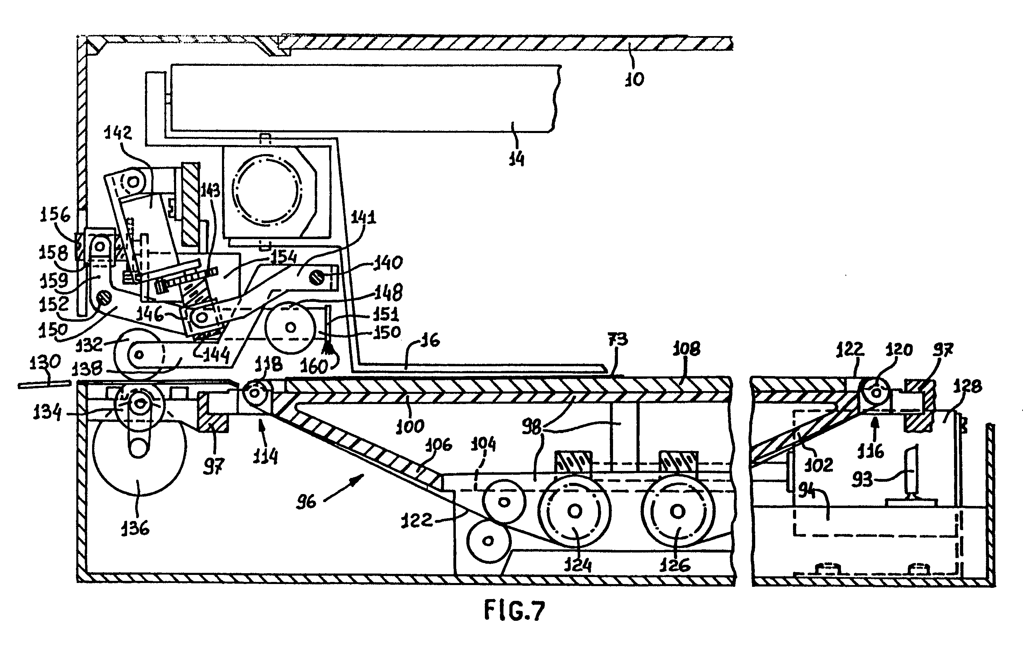

The manifolds 84, 86, 88 and 90 are in turn connected by flexible tubes 93 to the same number of main containers 94 fixed to the structure of the machine (see Figure 7).

As indicated hereinbefore, printing is effected on a sheet of plain paper 73 (see Figure 1) which is transported into the correct position for the printing operation by a paper transportation device 96 shown in Figures 6 and 7. The transportation device 96 is positioned below the carriage 16 and comprises a support frame 98 mounted on guides 97 fixed to the apparatus. The frame 98 is formed by four flat wall portions 100, 102, 104, 106 of electrically insulating plastics material and is disposed in such a way as to form a structure of trapezoidal cross-section. The wall portion 100 is disposed parallel to the exposure surface 12.

Fixed to the wall portion 100 is a flat metal plate 108 for performing the function of a support for a band or belt 122 for transporting the sheets of paper 73 to be printed, being maintained at a small distance from the print nozzles 72 and electrically insulated from the remainder of the metal structure of the apparatus.

Rotatably mounted at two opposite ends 114 and 116 of the wall portion 100 are two rollers 118 and 120 which are perpendicular to the direction of movement of the carriage 16 and which are idly rotatable on the frame structure 98 and around which passes the belt 122 of electrically insulating material, being for example of Mylar (registered trade mark). The belt 122, at the ends thereof, is wound on to two spools 124 and 126 which are parallel to the rollers 118 and 120 and which are rotated simultaneously and alternately in the two directions by a bi-directional motor 128.

The sheet of paper 73 is introduced on a guide 130 by means of rollers 132 and 134 of which the roller 134 is rotated by its own motor 136. The upper roller 132 is mounted at one end of a lever 138 which is pivoted on a fixed shaft 140 and is moved away from or towards the sheet 73 by means of a motor 142 which, by way of two gears 143, rotates a screw 144 within a nut 146 pivoted to an arm 141 of the lever 138.

A second roller 148 which is mounted idly on an oscillating arm 150 is positioned to press the sheet of paper 73 against the Mylar belt 122 in the vicinity of the roller 118 to promote the transportation movement of the paper over the plate 108 by means of the belt 122. The arm 150 is pivoted on a fixed shaft 152 and is rotated in the two directions for moving the roller 148 towards and away from the belt 122, by a motor 154, by way of a screw 156 and a nut 158 which is pivoted on one end 159 of the arm 150.

To promote adhesion of the sheet of paper 73 to the belt 122, a strong electrostatic field is created between the plate 108 and the sheet of paper 73 while the belt 122 acts as a dielectric. For that purpose, from the moment at which the sheet of paper 73 comes into contact with the belt 122 and until it is expelled after the printing operation, the plate 108 is connected to a pole of a high d.c. voltage source (not shown in the drawings). At the same time the sheet of paper 73 is charged at the opposite polarity by means of a brush 160 with electrically conductive bristles and connected to the other pole of the high voltage source and mounted at the end 151 of the arm 150.

The printing operation is carried out in accordance with a predetermined matrix of dots in the series-parallel mode and thus while the carriage 16 is advancing in the scanning direction (for example from left to right in Figures 1 and 6), the sheet of paper 73 is caused to oscillate on the surface 108 perpendicularly to the direction of movement of the carriage 16 with an amplitude of oscillation movement equal to the pitch "p" (Figure 4) between the homologous print elements 72 of the head 70. In that way, during each half-oscillation of the paper, the print elements 72 scan all the print positions along an elementary line of dots.

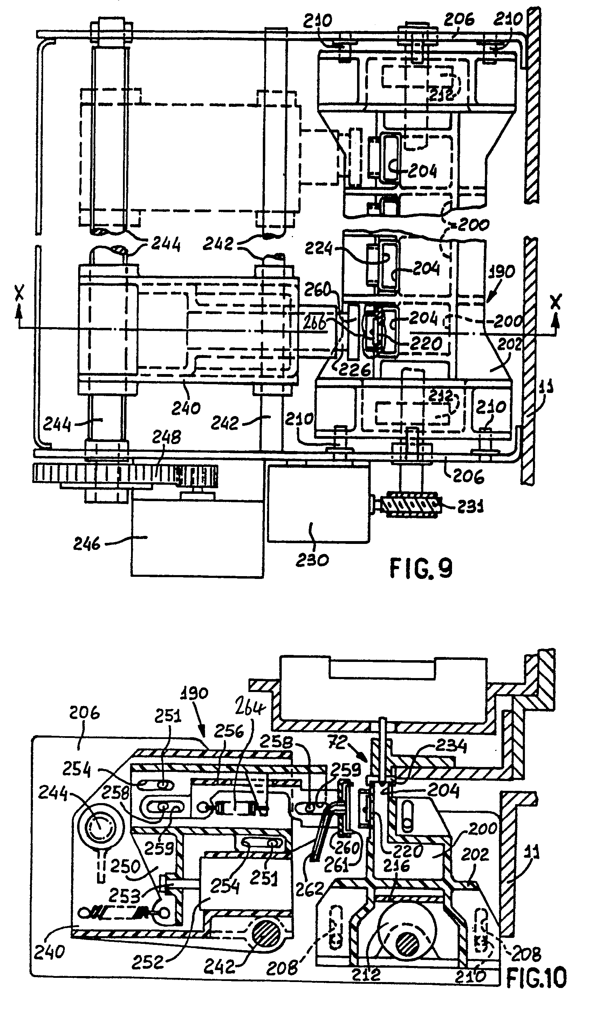

In order to ensure faithful detection of the chromatic components of the original by the optical system and to permit a high level of print definition, it is necessary for the reading and printing operations to take place with the carriage 16 stationary. Therefore the carriage 16 is caused to advance intermittently by one elementary line spacing at a time, with the stepping motor 22 (see Figure 1) being supplied with trains of pulses 180 (see Figure 8d) spaced by a rest time $T_1$ during which the operation of reading a line of dots on the original 10 and the operation of printing on the paper 73 the line of dots which has been previously read are carried out.

The sheet 73 is caused to oscillate in accordance with a curve in respect of speed V (see Figure 8a) made up of a portion 182 at a constant speed for a time $T_2$ and two portions 183 and 184 of acceleration and deceleration respectively. The operation of reading a line of dots on the original is performed for a time $T_3$ during a first part of the interval $T_4$ for braking of the movement of the paper 73 in one direction and the other. Subsequently, during the remaining part $T_5$ of the braking interval $T_4$, the carriage 16 (see Figure 1) is advanced by a line spacing by the motor 22 which is activated by the train of pulses 180 (see Figure 8d).

The items of information corresponding to the line of dots of the image which is read in the time $T_3$ are immediately processed, as already described hereinbefore, by the circuit shown in Figure 3. Printing of the information which is processed in that way is effected during the period $T'_2$ of the subsequent return movement of the paper at a constant speed.

At the end of the operation of printing on one side of the sheet 73, the carriage 16 is returned quickly to a parking position "S" (see Figure 6) which is disposed beyond the edge "F" of the sheet 73. In the parking position "S", the nozzles 72 are disposed in front of a device 190 for cleaning and moistening the nozzles. The device 190 is arranged to keep the nozzles 72 in a wet environment in order to ensure that no incrustation of dry ink occurs over the nozzles during prolonged rest periods of the head 70. The device 190 is also used in the manner described hereinbefore to free the nozzles 72 and the conduits 78 and 92 from any air bubbles or small impurities.

The moistening device 190 (see Figures 9 and 10) comprises a group of twelve chambers 200 which are aligned in parallel relationship to the line of print elements 72 and provided in a single structure 202.

Each chamber 200 has an upper aperture 204 which is disposed facing one of the groups 74 of print elements 72. The structure 202 is movable vertically with respect to an auxiliary frame 206 by slot means 208 which are slidable on pins 210 which are fixed to the frame 206.

The frame 206 is connected to the base portion 11 of the reproduction apparatus, at the left in Figure 7. The structure 202 is raised by means of a cam 212 which acts on a flat wall portion 216 of the structure 208 and which is rotatable on the frame 206. The cam 212 is rotated by a motor 230 by way of a speed reducing unit 231. Each chamber 200 is provided with a hole 220 which is disposed in a side wall 224 and to which a suction device 226 can be fitted to generate a depression within the chambers 200 for the purposes of sucking out the ink from nozzles which are possibly obstructed. The suction device 226 is mounted on the same frame 206 (see Figure 9) and comprises a support 240 which is slidable on a guide 242 fixed to the frame 206 and parallel to the direction of alignment of the chambers 200. The support 240 is moved by a screw 244 which is parallel to the guide 242 and rotatable on the frame 206. The screw 244 is rotated by a motor 246 (see Figure 9) by way of two speed reducing gears 248.

Within the support 240 (see Figure 10) a slider 250 is slidable on pegs 251 which are fixed to the support 240 and engaged in slots 254. The slider 250 is moved by a solenoid 252 which is fixed with respect to the support 240 and connected to the slider by means of a rod 253.

Mounted on the slider 250 is a slider member 256 which is slidable with respect to the slider 250 on pegs 258 which are fixed to the slider 250 and engaged in slots 259. The slide member 256 projects beyond the slider 250 with a manifold 260 provided with a suction cup 261 and aligned with the holes 220. The manifold 260 is connected by means of a flexible tube 262 (see Figure 10) to a suction pump (not shown in the drawings) for creating a depression in the chambers 204 when the manifold 260 is selectively connected to each of the chambers by way of the holes 220.

The moistening and cleaning device 190 is used in the following fashion. At the end of the operation of reproducing an image, after the print head 70 has moved into the parking position "S", the structure 202 is raised by the motor 230 and the cam 212 until the apertures 204 press against a seal 234 which is fixed to the print elements 72, as indicated in Figure 10. Then, the support 240 is moved along the guide 242 by the motor 246 and the screw 244 to be successively positioned in alignment with each of the chambers 200, for example in the position shown in broken lines in Figure 9. At that point the solenoid 250 is energised to move the slider 250 and thus the manifold 260 towards the hole 220 of one of the chambers 200, A spring 264 connected between the slide member 256 and the slider 250 ensures a perfect pneumatic seal as between the suction cup 260 and the edge of the hole 220. Due to the effect of the depression created in the chamber 200, a certain amount of ink is sucked through the nozzles which are disposed facing the chamber 200 by way of the aperture 204. The ink which is sucked in in that way is deposited in the chambers 200 and ensures that within the chambers there is a sufficient level of relative humidity to ensure that the ink in the meniscus of the nozzles does not dry out. At the end of the operation of sucking ink into all the chambers 200, the support 240 is returned to the rest position shown in solid lines in Figure 9. The structure 202 of the chambers 200 is however held in a raised position and in contact with the seals 234 throughout the period for which the head 70 remains inoperative. During that period, the optimum level of relative humidity within the chambers 200 is ensured by unidirectional diaphragm-type valves 266 which isolate the chambers 200 from the outside environment.

Returning to Fig. 8, bidirectional printing is possible with reading taking place (waveform (b)) during each deceleration 184 and printing taking place (waveform (c)) during each interval 182 of constant paper speed.

## Claims

1. Apparatus for the reproduction of an image of an original document, comprising a reading device (26-32) for detecting successive image portions on the document (10) along a scanning path, a printing device (70) for printing the detected image on a print carrier (73), a carriage (16) carrying both the reading (26-32) and the printing (70) devices movable along the scanning path and moving means (96) for moving the print carrier (73) perpendicularly to the direction of the scanning path, the reading device (26-32) comprising an image converter (32) which converts the detected image into an electrical signal adapted to drive the printing device (70), characterized in that the moving means (96) comprises a belt (122) of insulating material stretched beween two idle rollers (118, 120) which are parallel to each other, and by a metal support plate (108) for the belt, which extends between the rollers, and means (160) for electrostatically charging the print carrier (73) with respect to the plate for holding the print carrier adhering to the surface of the belt (122) opposite to the plate.

2. Apparatus according to claim 1, characterized in that the belt (122) is wound at two ends around corresponding rollers (124, 126) which are rotatable jointly and alternately in both directions of rotation for moving the print carrier (73) with an oscillating movement of a predetermined amplitude.

3. Apparatus according to claim 1 or 2, characterised in that the print device (70) comprises an array of ink jet print elements (72) aligned perpendicular to the direction of the movement of the carriage (16), the elements being arranged in one or more groups (74), the homologous elements of the groups being spaced by a constant pitch.

4. Apparatus according to claim 3, characterized in that the oscillating movement is of an amplitude which is equal to said constant pitch.

5. Apparatus according to claim 3 or 4, characterized in that each group contains the same number of ink jet print elements (72) supplied with different colour inks.

6. Apparatus according to any of claims 2 to 5, characterized in that the carriage (16) is advanced with an intermittent movement synchronized with the oscillating movement, the intermittent movement occurring during an interval of deceleration of the oscillations.

7. Apparatus according to any of claims 1 to 6, characterized in that the charging means comprise a high d.c. voltage generator and a charge distributor (160) which acts against the surface of the print carrier (73) which is opposite to the belt (122), the generator having one pole connected to the charge distributor and the other pole connected to the metal plate (108).

8. Apparatus according to claim 7 characterized in that the charge distributor (160) comprises a brush having electrically conductive bristles and selectively actuable for rubbing against the print carrier.

9. Apparatus according to any of claims 2 to 8, characterized in that the image converter (32) is rendered active in an interval (T3) comprised within each half-period of oscillation of the print carrier (73).

10. Apparatus according to claim 9, characterized in that the interval of activation is comprised in each interval (184) of deceleration of the print carrier (73).

11. Apparatus according to claim 9, characterized in that the electrical signals activate the print device (70) an interval (182) of constant speed of movement of the print carrier during each half period of the alternating movement.

12. Apparatus according to claim 9, 10 or 11, characterized in that the image converter (32) comprises first and second dichroic filters (37, 38) disposed in series for separating from the light beam beams of monochromatic light corresponding to three primary colours.

13. Apparatus according to claim 12, characterized in that the first dichroic filter (37) reflects a beam of monochromatic light of one of the three primary colours on to a first electro-optical transducer (45) and in that the second dichroic filter (38) respectively reflects and transmits beams of monochromatic light of the other two primary- colours on to corresponding second and third electro-optical transducers (45) for generating electrical signals which are representative of the luminous intensity of each of the three beams of monochromatic light.

14. Apparatus according to claim 13, characterized in that each of the representative electrical signals is processed by corresponding electronic circuit (53), these circuits being interconnected for generating electrical signals which are representative of colours intermediate the primary colours.

15. Apparatus according to any of claims 3 to 14, characterized by a cleaning device (190) comprising a row of chambers (200) which are aligned parallel to the groups (74) of elements (72), each chamber having an aperture (204) which is disposed facing one of the groups of print elements, the chambers being selectively movable into an operative position in which the print elements are introduced into the apertures with a pneumatic sealing effect in relation thereto, the cleaning device (190) further comprising a suction device (226) which can be selectively connected to each of the chambers in the said operative position for sucking ink from the print elements (72) of each group (74).

16. Apparatus according to claim 15, characterized in that the chambers (200) remain in the operative position during the periods of inactivity of the print elements (72) for maintaining those elements isolated from the outside environment.

17. Apparatus according to claim 15, characterized in that the suction device (226) comprises a suction conduit (260) which is mounted on a slide member (250) slidable perpendicularly to the row of chambers on a support (240) movable along a guide (242) parallel to the row of chambers and moved by a rotatable screw (244) which is parallel to the guide, the slide member being moved by a solenoid (252) fixed to the support for selectively connecting the suction conduit to each of the chambers (200).

18. A process for the reproduction of an image of an original document, comprising scanning the document (10) for reading the image by a reading device (26-32), conversion of the read image into electrical signals for driving a printing device (70), printing the converted image on a print carrier (73), advancing the reading device (26-32) and the printing device (70) in a scanning direction along the document (10) and moving the print carrier (73) in a direction perpendicular to the scanning direction, characterized in that the print carrier (73) is moved with an oscillating movement and in that the print device (70) is advanced with an intermittent movement which is synchronised with the oscillating movement for printing on the print carrier (73) during periods of the intermittent movement when the printing device (70) is stationary.

19. A process according to claim 18, characterized in that the oscillating movement has a cycle of oscillation comprising a first interval (182) at a constant speed interposed between an interval (183) of acceleration and an interval (184) of deceleration, and in that the print device is advanced during the interval

of deceleration.

**Ansprüche**

1. Gerät zur Reproduktion eines Bildes eines Originaldokuments, mit einer Lesevorrichtung (26-32) zum Feststellen aufeinanderfolgender Bildteile auf dem Dokument (10) längs einer Abtastspur, einer Druckvorrichtung (70) zum Drucken des festgestellten Bildes auf einen Druckträger (73), einem Wagen (16), der sowohl die Lesevorrichtung (26-32) als auch die Druckvorrichtung (70) längs der Abtastspur bewegbar trägt, und einem Bewegungsmittel (96) zum Bewegen des Druckträgers (73) senkrecht zur Richtung der Abtastspur, wobei die Lesevorrichtung (26-32) einen Bildumformer (32) aufweist, der das festgestellte Bild in ein elektrisches Signal umformt, durch das die Druckvorrichtung (70) antreibbar ist, **dadurch gekennzeichnet, daß** das Bewegungsmittel (96) ein Band (122) aus Isoliermaterial aufweist, das zwischen zwei Umlenkrollen (118, 120) gespannt ist, die parallel zueinander sind, daß eine Metallstützplatte (108) für das Band vorgesehen ist, die sich zwischen den Rollen erstreckt, und daß ein Mittel (160) zum elektrostatischen Laden des Druckträgers (73) relativ zu der Platte vorgesehen ist, um den Druckträger an der der Platte abgekehrten Oberfläche des Bandes (122) anhaftend zu halten.

2. Gerät nach Anspruch 1, **dadurch gekennzeichnet,** daß das Band (122) an zwei Enden um entsprechende Rollen (124, 126) gewickelt ist, die gemeinsam und abwechselnd in beiden Drehrichtungen drehbar sind, um den Druckträger (73) oszillierend mit einer vorbestimmten Amplitude zu bewegen.

3. Gerät nach Anspruch 1 oder 2, **dadurch gekennzeichnet,** daß die Druckvorrichtung (70) eine Reihe aus Tintenstrahldruckelementen (72) aufweist, die in einer geraden Linie senkrecht zur Bewegungsrichtung des Trägers (16) ausgerichtet und in einer oder mehreren Gruppen (74) angeordnet sind, wobei die homologen Elemente der Gruppen mit einer konstanten Teilung beabstandet sind. ,

4. Gerät nach Anspruch 3, **dadurch gekennzeichnet,** daß die Amplitude der oszillierenden Bewegung gleich der konstanten Teilung ist.

5. Gerät nach Anspruch 3 oder 4, **dadurch gekennzeichnet,** daß jede Gruppe die gleiche Anzahl von Tintenstrahldruckelementen (72) aufweist, denen verschiedenfarbige Tinte zugeführt wird.

6. Gerät nach einem der Ansprüche 2 bis 5, **dadurch gekennzeichnet,** daß der Wagen (16) mit einer intermittierenden Bewegung, die mit der oszillierenden Bewegung synchronisiert ist, vorgeschoben wird und die intermittierende Bewegung während eines Verlangsamungsintervalls der Oszillationen erfolgt.

7. Gerät nach einem der Ansprüche 1 bis 6, **dadurch gekennzeichnet, daß** das Lademittel einen Hochgleichspannungsgenerator und einen Ladungsverteiler (160) aufweist, der auf die dem Band (122) abgekehrte Oberfläche des Druckträgers (73) einwirkt, wobei der eine Pol des Generators mit dem Ladungsverteiler und der andere Pol mit der Metallplatte (108) verbunden ist.

8. Gerät nach Anspruch 7, **dadurch gekennzeichnet,** daß der Ladungsverteiler (160) eine Bürste aufweist, die elektrisch leitende Borsten hat und wählbar betätigbar ist, um an dem Druckträger zu reiben.

9. Gerät nach einem der Ansprüche 2 bis 8, **dadurch gekennzeichnet,** daß der Bildumformer (32) in einem Intervall (T3) eingeschaltet wird, das in jeder Halbperiode der Schwingung des Druckträgers (73) liegt.

10. Gerät nach Anspruch 9, **dadurch gekennzeichnet,** daß das Einschaltintervall in jedem Verlangsamungsintervall (184) des Druckträgers (73) liegt.

11. Gerät nach Anspruch 9, **dadurch gekennzeichnet,** daß die elektrischen Signale die Druckvorrichtung (70) in einem Intervall (182) konstanter Bewegungsgeschwindigkeit des Druckträgers während jeder Halbperiode der alternierenden Bewegung einschalten.

12. Gerät nach einem der Ansprüche 9 bis 11, **dadurch gekennzeichnet,** daß der Bildumformer (32) ein erstes und ein zweites Zweifarbenfilter (37, 38) aufweist, die hintereinander angeordnet sind, um aus dem Lichtstrahlenbündel Strahlenbündel aus monochromatischem Licht, das drei Grundfarben entspricht, abzutrennen.

13. Gerät nach Anspruch 12, **dadurch gekennzeichnet,** daß das erste Zweifarbenfilter (32) ein Strahlenbündel aus monochromatischem Licht mit einer der drei Grundfarben auf einen ersten elektrooptischen Umformer (45) reflektiert und daß das zweite Zweifarbenfilter (38) Strahlen aus monochromatischem Licht in den beiden anderen Grundfarben auf einen entsprechenden zweiten und dritten elektro-optischen Umformer (45) durchläßt, um elektrische Signale zu erzeugen, die repräsentativ für die Lichtstärke jedes der drei monochromatischen Lichtstrahlenbündel sind.

14. Gerät nach Anspruch 13, **dadurch gekennzeichnet,** daß jedes der repräsentativen elektrischen Signale durch eine entsprechende elektronische Schaltung (53) verarbeitet wird, wobei diese Schaltungen miteinander verbunden sind, um elektrische Signale zu erzeugen, die repräsentativ für zwischen den Grundfarben liegende Farben sind.

15. Gerät nach einem der Ansprüche 3 bis 14, **gekennzeichnet durch** eine Reinigungsvorrichtung (190), die eine Reihe von Kammern (200) aufweist, die parallel zu der Gruppe (74) aus Elementen (72) geradlinig ausgerichtet sind, wobei jede Kammer eine Öffnung (204) aufweist, die so angeordnet ist, daß sie einer der Gruppe von Druckelementen zugekehrt ist, wobei die Kammern wählbar in eine Betriebsposition bewegbar sind, in der die Druckelemente in die Öffnungen eingeführt werden, und zwar mit einem pneumatischen Reinigungseffekt in Relation dazu, und wobei die Reinigungsvorrichtung (190) ferner eine Saugvorrichtung (226) aufweist, die wählbar an jede der Kammern in der Betriebsposition angeschlossen werden kann, um Tinte aus den Druckelementen (72) jeder Gruppe (74) abzusaugen.

16. Gerät nach Anspruch 15, **dadurch gekennzeichnet**, daß die Kammern (200) während der Ausschaltperioden der Druckelemente (72) in der Betriebsposition verbleiben, um diese Druckelemente von der äußeren Umgebung getrennt zu halten.

17. Gerät nach Anspruch 15, **dadurch gekennzeichnet**, daß die Saugvorrichtung (226) eine Saugleitung (260) aufweist, die auf einem Gleiter (250) angebracht ist, der senkrecht zu der Kammerreihe auf einem Träger (240) gleitend verschiebbar ist, der längs einer Führung (242) bewegbar ist, die parallel zu der Kammerreihe ist und durch eine drehbare Schraube (244) bewegt wird, die parallel zu der Führung ist, wobei der Gleiter durch einen Hubmagneten (252) bewegt wird, der am Träger befestigt ist, um die Saugleitung wählbar mit jeder der Kammern (200) zu verbinden.

18. Verfahren zur Reproduktion eines Bildes eines Originaldokuments, bei dem das Dokument (10) zum Lesen des Bildes durch eine Lesevorrichtung (26 - 32) abgetastet wird, das gelesene Bild in elektrische Signale für den Antrieb einer Druckvorrichtung (70) umgeformt wird, das umgeformte Bild auf einen Druckträger (73) gedruckt wird, die Lesevorrichtung (26-32) und die Druckvorrichtung (70) in Abtastrichtung längs des Dokuments (10) vorgeschoben werden und der Druckträger (73) in einer zur Abtastrichtung senkrechten Richtung bewegt wird, **dadurch gekennzeichnet**, daß der Druckträger (73) oszillierend bewegt und die Druckvorrichtung (70) mit einer intermittierenden Bewegung vorgeschoben wird, die mit der oszillierenden Bewegung synchronisiert ist, um den Druckträger (73) während Perioden der intermittierenden Bewegung, wenn die Druckvorrichtung (70) stationär ist, zu bedrucken.

19. Verfahren nach Anspruch 18, **dadurch gekennzeichnet**, daß die Oszillierende Bewegung einen Oszillationszyklus hat, der ein erstes Intervall (182) mit einer konstanten Geschwindigkeit aufweist, das zwischen einem Beschleunigungsintervall (183) und einem Verlangsamungsintervall (184) liegt, und daß die Druckvorrichtung während des Verlangsamungsintervalls vorgeschoben wird.

## Revendications

1. Appareil pour la reproduction d'une image d'un document original, comprenant un dispositif de lecture (26-32) pour détecter des parties successives d'image sur le document (10) le long d'un trajet d'analyse, un dispositif d'impression (70) pour imprimer l'image détectée sur un support d'impression (73), un chariot (16) transportant à la fois le dispositif de lecture (26-32) et le dispositif d'impression (70) et déplaçable le long du trajet d'analyse ainsi qu'un moyen d'entraînement (96) pour faire déplacer le support d'impression (73) perpendiculairement à la direction du trajet d'analyse, le dispositif de lecture (26-32) comprenant un convertisseur d'image (32) qui convertit l'image détectée en un signal électrique adapté pour entraîner le dispositif d'impression (70), caractérisé en ce que le moyen d'entraînement (96) comprend une courroie (122) en matière isolante, tendue entre deux rouleaux fous (118, 120) qui sont mutuellement parallèles, ainsi qu'une plaque métallique (108) de support de la courroie, qui s'étend entre les rouleaux, et des moyens (160) pour charger électrostatiquement le support d'impression (73) par rapport à la plaque afin de maintenir le support d'impression en adhérence sur la surface de la courroie (122) qui est opposée à la plaque.

2. Appareil selon la revendication 1, caractérisé en ce que la courroie (122) est enroulée aux deux extrémités autour de rouleaux correspondants (124, 126) qui peuvent tourner conjointement et alternativement dans les deux sens de rotation afin de déplacer le support d'impression (73) selon un mouvement oscillant d'une amplitude prédéterminée.

3. Appareil selon la revendication 1 ou 2, caractérisé en ce que le dispositif d'impression (70) comprend un ensemble d'éléments (72) d'impression par jet d'encre, alignés perpendiculairement à la direction de mouvement du chariot (16), les éléments étant disposés en un ou plusieurs groupes (74), les éléments homologues des groupes étant espacés d'un pas constant.

4. Appareil selon la revendication 3, caractérisé en ce que le mouvement oscillant a une amplitude qui est égale audit pas constant.

5. Appareil selon la revendication 3 ou 4, caractérisé en ce que chaque groupe contient le même nombre d'éléments (72) d'impression par jet d'encre, alimentés avec des encres de couleurs différentes.

6. Appareil selon une quelconque des revendications 2 à 5, caractérisé en ce que le chariot (16) est avancé avec un mouvement intermittent synchronisé avec le mouvement oscillant, le mouvement intermittent se produisant pendant un intervalle de décélération des oscillations.

7. Appareil selon une quelconque des revendications 1 à 6, caractérisé en ce que les moyens de charge comprennent un générateur de haute tension continue et un distributeur de charge (160) qui agit sur la surface du support d'impression (73) qui est opposée à la courroie (122), le générateur étant relié par un pôle avec le distributeur de charge et par l'autre pôle à la plaque métallique (108).

8. Appareil selon la revendication 7, caractérisé en ce que le distributeur de charge (160) comprend une brosse pourvue de soies électriquement conductrices et pouvant être sélectivement actionnée pour frotter contre le support d'impression.

9. Appareil selon une quelconque des revendications 2 à 8, caractérisé en ce que le convertisseur d'image (32) est rendu actif dans un intervalle (T3) créé à l'intérieur de chaque demi-période d'oscillation du support d'impression 73 .

10. Appareil selon la revendication 9, caractérisé en ce que l'intervalle d'activation est créé dans chaque intervalle (184) de décélération du support d'impression (73).

11. Appareil selon la revendication 9, caractérisé en ce que les signaux électriques activent le dispositif d'impression (70) pendant un intervalle (182) de vitesse constante de mouvement du support d'impression au cours de chaque demi-période du mouvement alternatif.

12. Appareil selon la revendication 9, 10 ou 11, caractérisé en ce que le convertisseur d'image (32) comprend un premier et un second filtre dichroique (37, 38), disposés en série pour séparer du faisceau de lumière des faisceaux de lumière monochromatique correspondant à trois couleurs primaires.

13. Appareil selon la revendication 12, caractérisé en ce que le premier filtre dichroique (37) réfléchit un faisceau de lumière monochromatique d'une des trois couleurs primaires sur un premier transducteur électro-optique (45) et en ce que le second filtre dichroique (38) réfléchit et transmet respectivement des faisceaux de lumière monochromatique des deux autres couleurs primaires sur des second et troisième transducteurs électro-optiques correspondants (45) pour une génération de signaux électriques qui sont représentatifs de l'intensité lumineuse de chacun des trois faisceaux de lumière monochromatique.

14. Appareil selon la revendication 13, caractérisé en ce que chacun des signaux électriques représentatifs est traité par un circuit électronique correspondant (53), ces circuits étant interconnectés pour produire des signaux électriques qui sont représentatifs de couleurs intermédiaires desdites couleurs primaires.

15. Appareil selon une quelconque des revendications 3 à 14, caractérisé en ce qu'il est prévu un dispositif de nettoyage (190) comprenant une rangée de chambres (200) qui sont alignées parallèlement aux groupes (74) d'éléments (72), chaque chambre comportant une ouverture (204) qui est disposée en regard d'un des groupes d'éléments d'impression, les chambres étant sélectivement déplaçables jusque dans une position de travail dans laquelle les éléments d'impression sont introduits dans les ouvertures avec un effet d'étanchéité pneumatique par rapport à celles-ci, le dispositif de nettoyage (190) comprenant en outre un dispositif d'aspiration (226) qui peut être relié sélectivement à chacune des chambres dans ladite position de travail afin d'aspirer de l'encre à partir des éléments d'impression (72) de chaque groupe (74).

16. Appareil selon la revendication 15, caractérisé en ce que les chambres (200) restent dans la position de travail pendant les périodes d'inactivité des éléments d'impression (72) afin de maintenir ces éléments isolés de l'environnement extérieur.

17. Appareil selon la revendication 15, caractérisé en ce que le dispositif d'aspiration (226) comprend un conduit d'aspiration (260) qui est monté sur un élément coulissant (250) pouvant glisser perpendiculairement à la rangée de chambres sur un support (240) mobile le long d'un guide (242) parallèle à la rangée de chambres et déplacé par une vis tournante (244) qui est parallèle au guide, l'élément coulissant étant déplacé par un solenoïde (252) fixé sur le support pour relier sélectivement les conduits d'aspiration à chacune des chambres (200).

18. Un procédé pour la reproduction d'une image d'un document original, consistant à analyser le document (10) pour la lecture de l'image par un dispositif de lecture (26-32), convertir l'image lue en signaux électriques pour l'entrainement d'un dispositif d'impression (70), imprimer l'image convertie sur un support d'impression (73), avancer le dispositif de lecture (26-32) et le dispositif d'impression (70) dans une direction d'analyse le long du document (10) et déplacer le support d'impression (73) dans une direction perpendiculaire à la direction d'analyse, caractérisé en ce que le support d'impression (73) est déplacé avec un mouvement oscillant et en ce que le dispositif d'impression (70) est avancé avec un mouvement intermittent qui est synchronisé avec le mouvement oscillant pour une impression sur le support d'impression (73) pendant des périodes du mouvement intermittent lorsque le dispositif d'impression (70) est stationnaire.

19. Un procédé selon la revendication 18, caractérisé en ce que le mmouvement oscillant a un cycle d'oscillation comprenant un premier intervalle (182) a une vitesse constante, interposé entre un intervalle (183) d'accélération et un intervalle (184) de décélération, et en ce que le dispositif d'impression est avancé pendant l'intervalle de décélération.

FIG.1

EP 0 241 118 B1

FIG.2

FIG.4

FIG.5

FIG.3

FIG.8

FIG.6

EP 0 241 118 B1

FIG.7

FIG.9

FIG.10

15